Europäisches Patentamt

European Patent Office

Office européen des brevets

(19)

(11) **EP 0 840 884 B1**

(12) **FASCICULE DE BREVET EUROPEEN**

(45) Date de publication et mention
de la délivrance du brevet:
**25.07.2001 Bulletin 2001/30**

(51) Int Cl.⁷: **G01L 5/00**, G01L 13/04

(21) Numéro de dépôt: **96924031.6**

(86) Numéro de dépôt international:
**PCT/FR96/01004**

(22) Date de dépôt: **28.06.1996**

(87) Numéro de publication internationale:
**WO 97/04295 (06.02.1997 Gazette 1997/07)**

(54) **DISPOSITIF ET PROCEDE DETECTEUR DYNAMOMETRIQUE POUR ROULEMENTS ET PALIERS**

GERÄT UND VERFAHREN ZUR DREHMOMENTDETEKTION FÜR LAGER UND LAGERANORDNUNGEN

DYNAMOMETRIC DETECTOR DEVICE AND METHOD FOR BEARINGS

(84) Etats contractants désignés:
**DE ES GB IT SE**

(30) Priorité: **21.07.1995 FR 9508870**

(43) Date de publication de la demande:
**13.05.1998 Bulletin 1998/20**

(73) Titulaire: **S.N.R. ROULEMENTS
74010 Annecy Cédex (FR)**

(72) Inventeur: **NICOT, Christophe
F-74330 Epagny (FR)**

(74) Mandataire: **Fernandez, Francis Lionel et al
Renault,
Technocentre,
S.0267 - TCR AVA 0-56,
1 avenue du Golf
78288 Guyancourt (FR)**

(56) Documents cités:
**FR-A- 2 125 926          GB-A- 1 604 990**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un dispositif et procédé détecteur dynamométrique pour roulements et paliers qui fait application d'un moyen transmetteur d'efforts solidaire d'une bague de roulement et qui assure la liaison avec un moyen capteur.

La publication FR-A-2125926 décrit un roulement dans lequel une bague porte des jauges de contrainte et est pourvue d'une douille ajustée qui porte le moyen de connexion d'un câble de liaison desdites jauges à un appareil de mesure.

Le montage de telles jauges de contrainte sur le roulement nécessite un usinage préalable de la bague. De ce fait le dispositif détecteur dynamométrique ne peut équiper un roulement ne comportant pas un tel usinage tel qu'un roulement fabriqué en grande série.

Selon l'invention le moyen transmetteur d'effort et support du moyen capteur est constitué par l'armature du joint d'étanchéité du roulement dans laquelle une portée cylindrique de montage sur une bague fixe du roulement est prolongée radialement par un disque support d'une lèvre d'étanchéité dudit joint.

Le dispositif ainsi réalisé est avantageusement fixé à l'armature support d'un joint d'étanchéité amovible. Par voie de conséquence le dispositif peut être monté sur différents types de roulements sans modification préalable des constituants du roulement.

Le roulement équipé d'un joint d'étanchéité porteur du dispositif détecteur conforme à l'invention possède de ce fait des caractéristiques dimensionnelles standardisées qui autorisent son intégration dans des montages d'application existants.

D'autres caractéristiques et avantages de l'invention apparaîtront à la lecture de la description d'exemples de réalisation du dispositif détecteur dynamométrique, en référence au dessin annexé dans lequel.

- la figure 1 est une vue en coupe radiale d'un roulement équipé du dispositif détecteur dynamométrique monté sur un joint d'étanchéité à lèvre radiale.

- la figure 2 est une vue à une plus grande échelle de la zone de montage du joint d'étanchéité représenté à la figure 1.

- la figure 3 est une vue à une plus grande échelle de la zone de montage du joint d'étanchéité équipé d'une variante de réalisation du dispositif détecteur dynamométrique.

- la figure 4 est une représentation perspective de l'armature représentée à la figure 3 support du dispositif détecteur et du joint d'étanchéité.

- les figures 5, 6 sont des représentations schématiques d'un roulement et des zones de montage du dispositif détecteur.

- les figures 7. 8 représentent le diagramme de variation du signal représentatif de la charge du roulement en fonction du temps, en référence des montages du dispositif représentés respectivement aux figures 5 et 6.

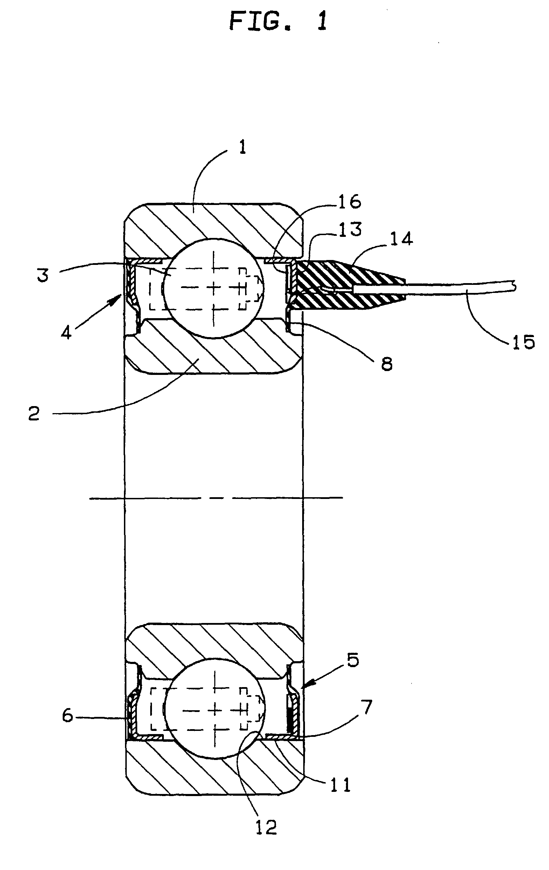

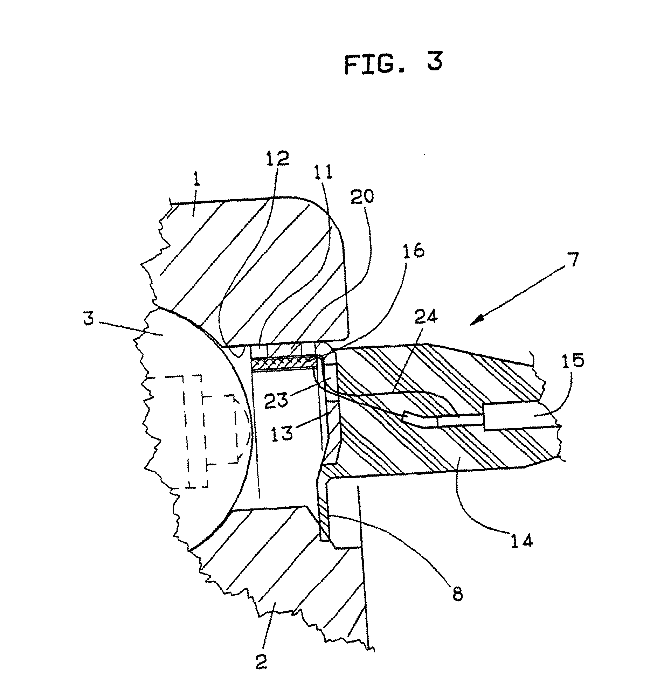

La figure 1 représente un roulement constitué principalement par une bague extérieure 1 fixe, une bague intérieure 2 tournante et des corps roulants 3 au contact des pistes de roulement portées par lesdites bagues 1, 2. Des joints d'étanchéité 4, 5 sont portés par la bague extérieure et sont localisés de part et d'autre du chemin de roulement usiné dans ladite bague.

Les joints d'étanchéité 4 et 5 possèdent respectivement une armature support de montage 6, 7. L'armature telle que 6 possède une portée axiale cylindrique.

L'armature 7 sur laquelle est fixé le moyen transmetteur d'effort possède une portée axiale cylindrique 11 de montage au contact de l'alésage 12 de la bague fixe 1 et une prolongation radiale en forme de disque 13 support d'une lèvre d'étanchéité du joint d'étanchéité 8.

L'armature 7 porte également la tête 14 d'un câble de raccordement 15 dont un exemple de réalisation est décrit dans la publication EP-A-484195.

Le moyen transmetteur est constitué par un élément capteur 16, sensible aux déformations qu'il subit.

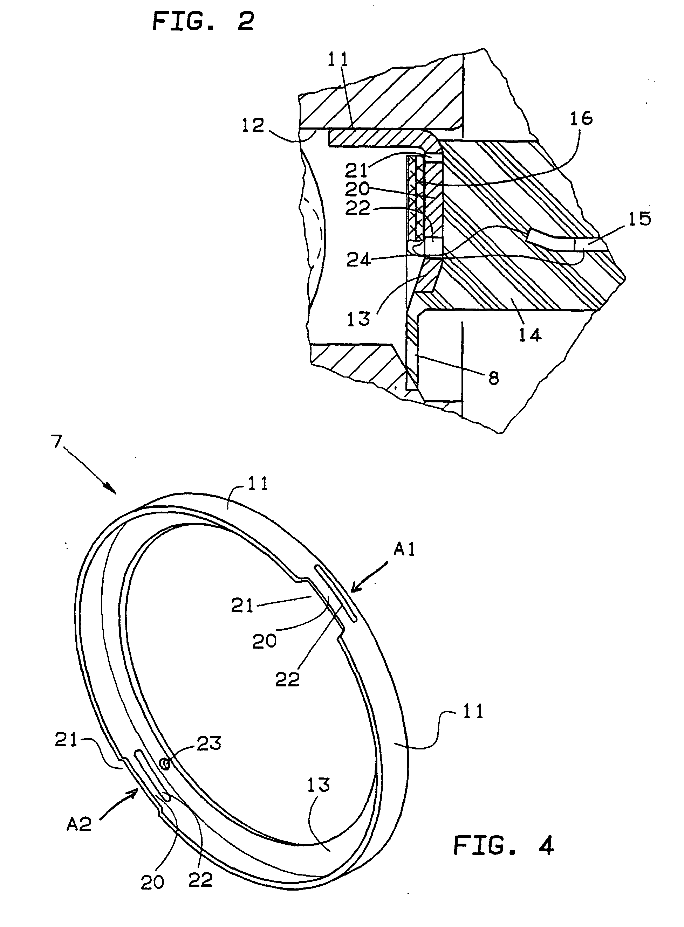

A titre d'exemple, l'élément capteur d'effort est constitué par un film piézoélectrique ou piézorésistif placé sur la partie cylindrique 11 (fig. 3) ou sur le disque support 13 (fig. 2).

L'élément capteur 16 est fixé par tout moyen connu, soit sur la face libre de la portée axiale 11 (figure 3), soit sur l'une des faces du disque 13 (figure 2). L'élément capteur 16 peut éventuellement être surmoulé par l'élastomère constitutif de la garniture d'étanchéité 8.

La figure 4 est un exemple de réalisation de l'armature 7 et montre au moins une zone $A_x$ (x = 1) élastiquement défonnable qui possède une sensibilité aux efforts de déformation augmentée. A cet effet la zone $A_x$ est matérialisée par un barreau élastique 20 constitué par une portion de la portée 11 localisée entre une échancrure axiale 21 et une fente 22. A proximité du barreau 20 et sur le disque 13 est localisé le perçage 23 qui assure le passage des conducteurs de branchement 24 de l'élément capteur 16 à la tête 14 du câble de raccordement 15.

Le dispositif fonctionne de la manière suivante.

Lorsqu'une force est appliquée sur le palier de roulement, les efforts sont transmis d'une bague à l'autre par les corps roulants 3, et les bagues de roulement 1, 2 subissent dans les zones de contact, des déformations proportionnelles à l'effort appliqué. Les déformations de la bague fixe au niveau de l'alésage 12 sont transmis à l'armature 7 et dans l'élément capteur d'effort 16.

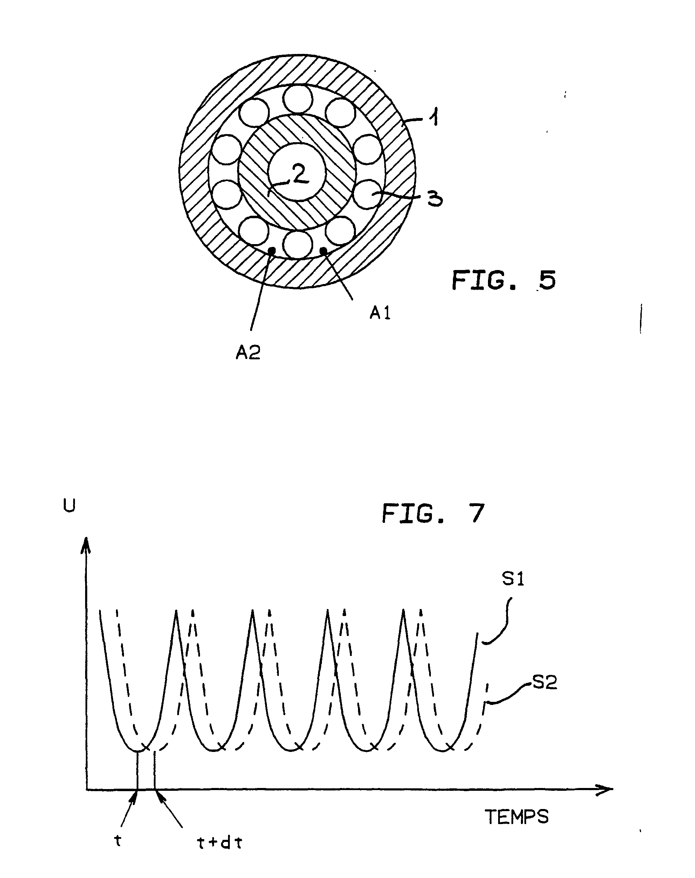

Lorsque la bague tournante 2 est mise en rotation, le passage successif des corps roulants 3 dans les zones $A_1$ et $A_2$ (figure 5) engendre des déformations périodiques dans l'armature 7, et dans l'élément capteur 16. Le dispositif détecteur des efforts fournit dans ce cas un signal électrique périodique (S).

Les caractéristiques du signal (S) varient par exemple en fonction de l'effort appliqué sur le roulement. Les mesures sont traitées par des chaînes de mesures habituelles, incluant un récepteur, un amplificateur et un système de traitement du signal.

L'analyse du signal électrique (S) recueilli permet de déterminer une amplitude Ux du signal, qui correspond à la déformation de la zone Ax proportionnelle à la charge appliquée sur le palier, et une fréquence caractéristique $\Omega$ qui est principalement reliée à la vitesse de rotation du palier et au nombre de corps roulants (figure 5).

$$\Omega - \frac{N}{2}(1 - \frac{D}{d}\cos(a))\frac{Z}{60}$$

$\Omega$, fréquence du signal S

N, vitesse de rotation de l'arbre, en tr/mn

D, diamètre des corps roulant, en mm

d, diamètre primitif du roulement, en mm

Z, nombre de corps roulant

a, angle de contact entre le chemin de roulement et les éléments roulant au lieu de mesure, en dégré.

Dans un autre cas. il est nécessaire d'augmenter la sensibilité du dispositif capteur de force.

Une première possibilité consiste à utiliser un élément capteur sous forme d'un film à plusieurs couches associées.

Selon une variante du dispositif l'armature 7 possède au moins une zone localisée $A_x$ (figure 4) élastique déformable.

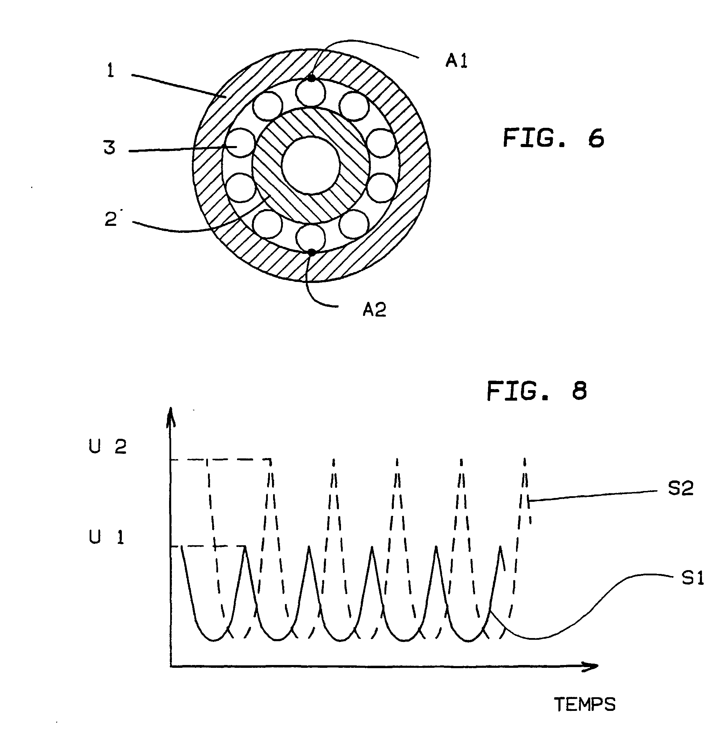

Selon un autre mode de réalisation du procédé, on mesure dans deux zones de la bague 1, l'effort appliqué. Selon l'exemple d'application du dispositif représenté aux figures 5 et 6, on détermine les signaux S1 et S2 dans deux zones de l'armature 7 tels que :

$$S_1 = f(U_1, t) \text{ et } S2 = f(U_2, t + dt)$$

$U_1$ est l'amplitude du signal $S_1$ dans la zone $A_1$

$U_2$ est l'amplitude du signal $S_2$ dans la zone $A_2$

t est le temps

dt est le déphasage temporel entre les signaux $S_1$ et $S_2$.

Selon le mode de réalisation du procédé schématisé à la figure 6, le joint d'étanchéité 8 permet la mesure de l'effort appliqué au roulement dans deux zones

$A_1$, $A_2$ diamétralement opposées et dans l'axe d'établissement de l'effort radial appliqué sur le roulement. On détermine les composantes radiale Fr et axiale Fa de l'effort appliqué sur le roulement, à la suite de l'analyse des amplitudes des signaux émis par le dispositif de détection des efforts appliqués.

$$U_1 = f(Fa) \text{ et } U_2 = f(Fa + Fr)$$

Fa, module de l'effort axial appliqué sur le roulement,

Fr, module de l'effort radial appliqué sur le roulement.

Selon la figure 5. le joint d'étanchéité permet la détection de l'effort appliqué au roulement localement dans deux zones $A_1$, $A_2$ angulairement espacées et l'indication du sens de rotation du roulement, à la suite de l'analyse du déphasage dt des signaux émis par le dispositif de détection.

La chaîne de traitement du signal S permet également de suivre l'état de fonctionnement du roulement et en particulier de prévenir une avarie de ce roulement.

Le dispositif permet de suivre les variations du spectre des fréquences qui sont contenues dans le signal électrique S. Les pics de fréquences élevées sont caractéristiques du bruit créé par le passage des corps roulant dans une zone détériorée de la piste de roulement.

Sans sortir du cadre de l'invention, il est également possible d'appliquer les mesures constructives précitées à des dispositifs d'étanchéité, tel qu'un déflecteur de rétention de la graisse du roulement.

Selon les divers modes d'application du dispositif on compare les signaux représentatifs des composantes de l'effort à une valeur déterminée dudit signal et on détecte les variations et caractéristiques desdits signaux pour définir les paramètres de fonctionnement du roulement ou du palier tels que sa vitesse, son sens de rotation, la force axiale et/ou radiale

De plus le dispositif permet de vérifier le bon fonctionnement du roulement ou palier.

### Revendications

1. Dispositif détecteur dynamométrique pour roulement et palier dans lequel un moyen transmetteur d'effort est solidaire d'une bague du roulement et supporte un moyen détecteur (16), caractérisé par le fait que le moyen transmetteur d'effort et support du moyen détecteur d'effort est constitué par l'armature (7) du joint d'étanchéité (8) du roulement, constituée de manière connue en soi par une portée cylindrique (11) de montage sur une bague fixe (1) du roulement que prolonge radialement un élément constitutif d'un disque support (13) d'une lèvre d'étanchéité dudit joint (8).

2. Dispositif détecteur selon la revendication 1, caractérisé par le fait que le moyen détecteur (16) est localisé dans une zone A$_x$ élastique déformable de l'armature (7) du joint d'étanchéité (5) sous l'effet d'une charge appliquée au roulement en cours de fonctionnement.

3. Dispositif détecteur selon l'une quelconque des revendications 1 ou 2, caractérisé par le fait que le moyen détecteur est constitué par un film capteur d'effort.

4. Procédé de détection dynamométrique qui fait application du dispositif selon l'une quelconque des revendications 1 à 3, dans lequel on mesure à partir des efforts appliqués dans deux zones d'une même bague et selon la direction radiale d'établissement dudit effort, les composantes radiales et/ou axiales desdits efforts et que l'on détecte les variations des signaux représentatifs desdites composantes.

5. Procédé de détection selon la revendication 4, dans lequel on compare les signaux représentatifs desdites composantes de l'effort à une valeur déterminée dudit signal et on détermine des paramètres de fonctionnement du roulement tels que

   - le sens de rotation du roulement à partir du déphasage des signaux émis dans les deux zones de détection de l'effort.

   - la vitesse du roulement à partir de l'analyse du spectre de fréquences desdits signaux.

   - un défaut de fonctionnement du roulement à partir des variations du spectre de fréquences.

**Patentansprüche**

1. Dynamometrische Ermittlungsvorrichtung für ein Wälzlager oder Lager, wobei ein Beanspruchungsübertragungsmittel fest mit einem Ring des Wälzlagers verbunden ist und ein Ermittlungsmittel (16) trägt, dadurch gekennzeichnet, dass das Mittel, das die Beanspruchung überträgt und das Mittel zur Ermittlung der Beanspruchung trägt, durch die Armatur (7) der Dichtung (8) des Wälzlagers gebildet wird, die auf an sich bekannte Weise durch einen zylindrischen Auflageteil (11) zur Befestigung an einem fixen Ring (1) des Wälzlagers gebildet wird, der radial durch ein aus einer Scheibe gebildetes Element (13) verlängert wird, das eine Dichtlippe der genannten Dichtung (8) trägt.

2. Ermittlungsvorrichtung nach Anspruch 1, dadurch gekennzeichnet, dass das Ermittlungsmittel (16) in einer Zone A$_x$ der Armatur (7) der Dichtung (5) angeordnet ist, die unter der Wirkung einer Belastung, die während des Betriebs auf das Wälzlager einwirkt, elastisch verformbar ist.

3. Ermittlungsvorrichtung nach einem der Ansprüche 1 oder 2, dadurch gekennzeichnet, dass das Ermittlungsmittel durch einen Film gebildet wird, der die Belastung aufnimmt.

4. Dynamometrisches Ermittlungsverfahren, das die Vorrichtung nach einem der Ansprüche 1 bis 3 anwendet, wobei man ausgehend von den Beanspruchungen, die auf zwei Zonen eines Rings und in der radialen Richtung der Entstehung der genannten Belastung einwirken, die radialen und/oder axialen Komponenten der genannten Beanspruchungen misst und wobei man die Veränderungen der Signale ermittelt, die repräsentativ für die genannten Komponenten sind.

5. Ermittlungsverfahren nach Anspruch 4, wobei man die Signale, die repräsentativ für die genannten Komponenten der Beanspruchung sind, mit einem bestimmten Wert des genannten Signals vergleicht und wobei man Betriebsparameter des Wälzlagers bestimmt, wie zum Beispiel

   - die Drehrichtung des Wälzlagers auf der Basis der Phasenverschiebung der Signale, die in den beiden Zonen der Ermittlung der Beanspruchung ausgesendet werden;

   - die Wälzgeschwindigkeit auf der Basis der Analyse des Frequenzspektrums der genannten Signale;

   - einen Betriebsfehler des Wälzlagers auf der Basis der Veränderungen des Frequenzspektrums.

**Claims**

1. A dynamometric detector device for a bearing and a rolling bearing in which a force-transmitter means is fixed with respect to a rolling bearing race and supports a detector means (16), characterised in that the force-transmitter means supporting the force-detector means is formed by the reinforcement (7) of the seal (8) of the rolling bearing, which is constituted in per se known manner by a cylindrical mounting portion (11) for mounting on a fixed race (1) of the rolling bearing which is prolonged radially by a constituent component of a support disc (13) for a sealing lip of the seal (8).

2. A detector device according to claim 1 characterised in that the detector means (16) is located in an elastic deformable zone $A_x$ of the reinforcement (7) of the seal (5) under the effect of a load applied to the rolling bearing in the course of operation.

3. A detector device according to either one of claims 1 and 2 characterised in that the detector means is formed by a force pick-up film.

4. A dynamometric detection process which uses the device according to any one of claims 1 to 3 wherein on the basis of the forces applied in two zones of the same race and in the radial direction in which said force is established, the radial and/or axial components of said forces are measured and that the variations in the signals which are representative of said components are detected.

5. A detection process according to claim 4 wherein the signals which are representative of said components of the force are compared to a given value of said signal and operating parameters of the rolling bearing are determined such as:

   - the direction of rotation of the rolling bearing on the basis of the phase shift of the signals emitted in the two force-detection zones;
   - the speed of the rolling bearing on the basis of analysis of the range of frequencies of said signals; and
   - a defect in operation of the rolling bearing on the basis of the variations in the range of frequencies.

# FIG. 1

# FIG. 3

FIG. 2

FIG. 4

FIG. 5

A1

A2

FIG. 7

U

S1

S2

TEMPS

t    t+dt

FIG. 6

FIG. 8